# FASCICULE DE BREVET EUROPEEN

(11) **EP 0 967 416 B1**
(45) Date de publication et mention de la délivrance du brevet: **29.10.2003**
(21) Numéro de dépôt: 99401601.2
(22) Date de dépôt: 25.06.1999
(51) Int. Cl.: F16H 57/00, F16H 7/18

(54) **Galet pour le guidage et/ou la tension d'une courroie de transmission**
Rolle zum Führen und/oder Spannen eines Treibriemens
Pulley for guiding and/or tensioning a transmission belt

(30) Priorité: 26.06.1998 FR 9808122
(43) Date de publication de la demande: 29.12.1999
(73) Titulaire: Renault s.a.s., 92100 Boulogne Billancourt (FR)
(72) Inventeur: Der Matheossian, Jean-Yves, 75005 Paris (FR)
(74) Mandataire: Srour, Elie

(56) Documents cités:
- DE-A- 4 304 829
- DE-A- 19 515 351
- GB-A- 713 557
- GB-A- 1 405 259
- US-A- 5 117 970
- PATENT ABSTRACTS OF JAPAN vol. 016, no. 343 (M-1285), 24 juillet 1992 (1992-07-24) & JP 04 102755 A (TOYOTA MOTOR CORP;OTHERS: 01), 3 avril 1992 (1992-04-03)

## Description

La présente invention concerne un dispositif de guidage d'une courroie de transmission, comprenant un galet comme révélé dans DE 19515351 A et correspondant au préambule de la revendication 1.

L'invention concerne plus particulièrement un galet destiné à être disposé sur le trajet d'une courroie crantée pour l'entraînement en rotation de composants et d'équipements d'un moteur de véhicule automobile.

Selon une conception connue, la courroie crantée est entraînée par un pignon associé au vilebrequin du moteur et elle entraîne par exemple au moins un arbre à cames par l'intermédiaire d'au moins un pignon d'arbre à cames. La tension de la courroie, qui peut être réglable, est assurée par l'intermédiaire d'au moins un galet tendeur qui coopère avec le dos de la courroie crantée, le parcours de la courroie pouvant aussi comporter au moins un galet enrouleur de même type.

Selon une conception générale connue, le corps du galet est monté tournant, c'est-à-dire fou en rotation, et la surface périphérique de forme générale cylindrique ou tronconique du corps du galet est en contact avec le dos, ou verso, lisse de la courroie.

Afin de réduire les bruits parasites, et nuisibles au confort des occupants du véhicule, résultant de l'entraînement de la distribution du moteur à combustion par une courroie crantée, qui résultent des tensions dynamiques élevées que subissent les brins de courroie provoquant des phénomènes de battements, on a déjà proposé différentes solutions.

Il a par exemple déjà été proposé d'augmenter la masse linéique de la courroie ou de modifier l'état de surface du dos de la courroie. Ces solutions ne sont pas satisfaisantes dans la mesure où la modification de la masse linéique fait varier de manière importante le comportement dynamique de la courroie, la modification de l'état de surface de son dos nécessitant des modifications importantes des processus de fabrication de la courroie et induisant aussi des modifications du comportement en entraînement de la courroie.

Une autre série de solutions consiste à modifier la forme de la surface périphérique, ou piste, des galets en contact avec le dos de la courroie.

Il a ainsi déjà été proposé de prévoir que la piste du galet comporte au moins un bourrelet périphérique à section de forme et de hauteur variables.

Il a aussi été proposé que la piste du galet comporte des sections de surface réparties, de manière régulière ou irrégulière, angulairement autour de l'axe de rotation du galet, ces sections étant en nombre plus important que le nombre de dents de la courroie crantée en périphérie de la piste.

Une autre solution déjà proposée consiste à imprimer volontairement des variations d'efforts en adoptant une forme non cylindrique circulaire pour la piste ou en prévoyant que le galet à piste cylindrique circulaire est monté à rotation de manière excentrée.

Une autre série de solutions consiste à prévoir que la piste n'est pas cylindrique ou purement tronconique et présente par exemple, en coupe transversale, une courbure concave notamment en forme de gorge en V.

Enfin, il a été proposé, dans la zone du plan médian transversal du galet, de prévoir une surépaisseur continue à forme de section rectangulaire, bombée ou trapézoïdale.

Toutes ces solutions ont pour inconvénient de ne pas résoudre entièrement le problème de la réduction des bruits parasites et de faire appel à des structures de galets et/ou à des procédés pour leur réalisation qui sont complexes et qui ne permettent notamment pas de réaliser de manière aisée une gamme de galets satisfaisants aisément adaptables en fonction des dimensions de la courroie et des différentes applications.

Afin de remédier à ces inconvénients, l'invention propose un galet du type mentionné précédemment, caractérisé en ce que la surface périphérique du corps du galet est ondulée selon la direction axiale.

Selon d'autres caractéristiques de l'invention :
- le corps du galet est constitué d'un empilage de disques ;
- les disques sont adjacents ;
- des disques sont cylindriques circulaires ;
- les disques circulaires sont de diamètres différents ;
- des disques présentent un profil extérieur en forme de came ;
- des disques sont coaxiaux ;
- des disques sont excentrés les uns par rapport aux autres ;
- les disques sont d'épaisseur sensiblement constante ;
- les disques présentent des bords à forme arrondie ;
- les disques présentent un profil bombé selon la direction axiale (A1) ;
- la surface périphérique du galet est de forme générale cylindrique, tronconique ou encore bombée.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un exemple simplifié d'une transmission de distribution par courroie crantée dans laquelle la courroie est tendue au moyen d'un galet réalisé selon l'invention ;
- la figure 2 est une vue latérale en élévation du galet tendeur de la figure 1 ;
- la figure 3 est une vue de dessus du galet de la figure 2 ;
- les figures 4 et 5 sont des vues similaires à celles des figures 2 et 3 qui illustrent un autre mode de réalisation d'un galet tendeur conforme aux enseignements de l'invention ; et
- la figure 6 est un schéma montrant l'excentrement de disques empilés appartenant à un galet réalisé conformément aux enseignements de l'invention.

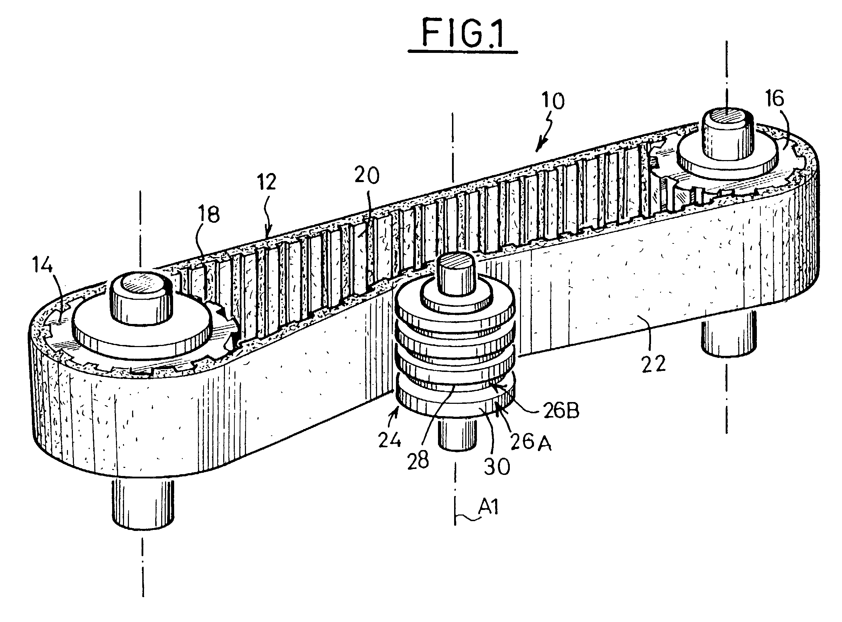

On a représenté à la figure 1 une transmission 10 comportant une courroie crantée 12 qui est par exemple entraînée en rotation par un pignon 14 qui est entraîné en rotation par le vilebrequin (non représenté) d'un moteur à combustion d'un véhicule automobile.

La courroie 12 transmet l'effort qui lui est appliqué par le pignon 14 à un pignon récepteur 16 qui est par exemple un pignon d'arbre à cames (non représenté).

Les pignons 14 et 16 sont d'axes de rotation sensiblement parallèles.

D'une manière connue, la courroie crantée 12 se présente sous la forme d'un bandeau continu d'épaisseur sensiblement constante dont la face interne ou recto 18 comporte une série de dents 20 pour constituer la face interne crantée de la courroie 12 qui coopère avec les dents complémentaires des pignons 14 et 16.

La face de dos ou verso 22 de la courroie crantée 12 se présente sous la forme d'une bande continue à surface sensiblement lisse.

De manière connue, pour assurer la tension de la courroie 12, il est par exemple prévu au moins un galet tendeur 24 qui est monté fou à rotation autour d'un axe A1 sensiblement parallèle aux axes de rotation des pignons 14 et 16.

Conformément à un exemple de réalisation d'un galet selon l'invention, le galet 24 est constitué par un empilage de disques adjacents 26A, 26B, dont, comme cela sera expliqué par la suite, les diamètres sont différents et/ou les axes sont excentrés, de manière que la surface périphérique, ou enveloppe extérieure, du galet 24 qui est en contact avec le dos 22 de la courroie 12 soit ondulée selon la direction axiale, c'est-à-dire comporte une série de dépressions 28 et de saillies 30i si l'on considère cette surface périphérique en se déplaçant transversalement, c'est-à-dire selon une direction parallèle à l'axe rotation A1 du galet 24.

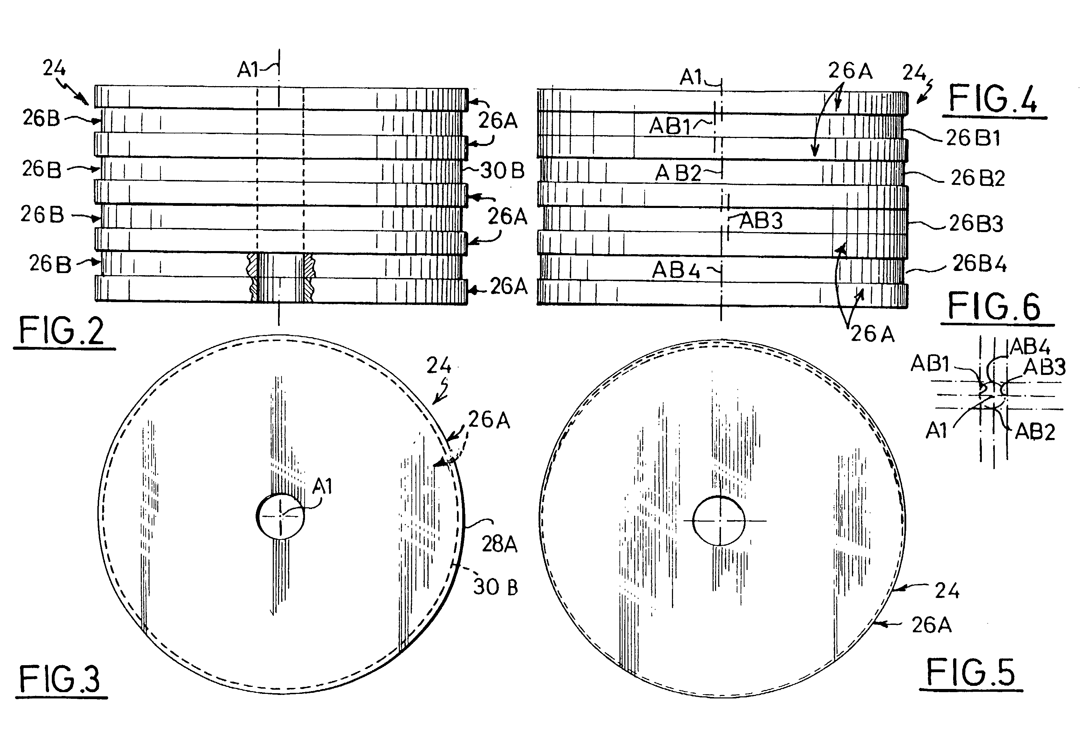

Dans le premier exemple de réalisation illustré en détail aux figures 2 et 3, le galet 24 est constitué par un empilement de neuf disques adjacents.

Plus précisément, les neuf disques comprennent cinq disques de grand diamètre 26A et quatre disques de petit diamètre 26B qui sont intercalés entre les disques de grand diamètre 26A.

Dans cet exemple, les neuf disques sont coaxiaux d'axe commun confondu avec l'axe de rotation A1.

Ainsi, la surface périphérique ou enveloppe extérieure du corps du galet 24 est constituée par une alternance régulière de saillies constituées par les pistes cylindriques extérieures 28A des disques de grand diamètre et de dépression 30B constitué par les pistes cylindriques extérieures des disques de petit diamètre 26B.

Dans l'exemple de réalisation illustré sur les figures, les disques 26A et 26B sont illustrés comme ayant tous sensiblement la même épaisseur axiale.

Sans sortir du cadre de l'invention, il est possible de choisir des disques d'épaisseurs différentes, l'épaisseur de chaque disque étant de préférence au moins égale au diamètre de l'un des câbles ou filins qui, d'une manière connue, renforcent longitudinalement le bandeau principal ou talon d'épaisseur constante de la courroie.

L'invention n'est pas limitée non plus à l'empilage de deux séries de disques de diamètres différents, le corps du galet 24 pouvant être constitué par un empilage d'un plus grand nombre de séries de disques, chaque série d'un diamètre déterminé comportant de préférence des disques de même épaisseur axiale.

La disposition alternée de disques de diamètres différents appartenant à deux séries de disques permet avantageusement de prévenir le glissement latéral du dos 22 de la courroie 12 sur le galet 24 lorsque le diamètre des disques augmente et diminue d'une façon alternée le long d'une section transversale de l'empilement.

Lorsque les disques sont disposés de manière concentrique ou coaxiale, comme cela est illustré aux figures 2 et 3, l'agencement crée un décalage local des vibrations des câbles ou filins de renfort dans les brins de la courroie qui sont en contact avec la piste ou surface cylindrique extérieure du galet, ce décalage réduisant l'amplitude d'oscillation des brins lorsqu'ils subissent un phénomène de résonance.

Un décalage variable des vibrations des câbles ou filins peut être obtenu en procédant à des variations complexes du nombre de séries de diamètre des disques le long de la largeur transversale du galet.

La différence de diamètres entre les disques appartenant aux deux séries de disques 26A et 26B du mode de réalisation illustré aux figures 1 et 2 peut notamment être choisie en fonction de l'épaisseur de la partie principale continue en forme de bandeau de la courroie, c'est-à-dire de l'épaisseur séparant les surfaces 18 et 22 en tenant compte éventuellement ou non du diamètre des câbles ou filins de renfort.

Dans l'autre mode de réalisation illustré à titre d'exemple aux figures 4 et 5, le corps du galet 24 est ici aussi constitué par un empilage de neuf disques adjacents.

Cet empilage est constitué de disques appartenant à deux séries de disques, c'est-à-dire de disques 26A de plus grand diamètre et de disques 26B de petit diamètre.

Les quatre disques de grand diamètre 26A sont tous coaxiaux ayant pour axe commun l'axe A1 de rotation du galet 24.

Par contre, les quatre disques intermédiaires de plus petit diamètre 26B sont excentrés par rapport à l'axe géométrique A1.

L'excentrement radial de l'axe de chacun des disques de petit diamètre 26B1, 26B2, 26B3, 26B4, est ici égal et, comme on peut le voir plus clairement sur le schéma de la figure 6, la position de l'axe de rotation AB1, AB2, AB3, AB4, de chaque disque de petit diamètre 26B1, 26B2, 26B3, 26B4 par rapport à l'axe général de rotation A1 est décalé angulairement de 90° autour de l'axe A1.

Ainsi, l'axe géométrique AB2 du deuxième disque de petit diamètre 26B2 (en considérant l'empilement de la figure 4 de haut en bas) est décalé angulairement de 90° par rapport à l'axe géométrique AB1 du premier disque de petit diamètre 26B1 et ceci dans le sens anti-horaire en considérant le schéma de la figure 6.

Ce décalage angulaire est successivement le même pour les quatre disques de petit diamètre 26B empilés verticalement du haut en bas, avec interposition à chaque fois d'un disque de grand diamètre 26A.

Les variantes mentionnées précédemment relatives à l'épaisseur des disques et au nombre de séries de disques s'appliquent également au deuxième mode de réalisation illustré aux figures 4 et 5.

La disposition de disques empilés avec excentrement permet d'imposer une ondulation d'ensemble aux câbles ou filins de renfort de la courroie dont le dos est en contact avec le galet 24. Cette ondulation favorise une modification induite des conditions vibratoires des brins de la courroie en interdisant l'établissement des principaux modes de battement de ces brins.

Lorsque les disques sont partiellement disposés d'une manière excentrique, une série de disques reste alignée concentriquement.

On nomme diamètre primitif le diamètre de cette classe de disques, c'est-à-dire le diamètre des disques de grand diamètre 26A en considérant l'exemple de la figure 4. Les disques 26Bi appartenant à l'autre série de disques, qui sont ici les disques de plus petit diamètre présentent un excentrement selon une direction radiale qui varie, comme cela a été expliqué, selon la position axiale du disque dans l'empilement.

Sans sortir du cadre de l'invention, l'excentrement peut être appliqué aux disques de petit diamètre ou aux disques de plus grand diamètre.

De même, l'ondulation d'ensemble appliquée peut être obtenue en procédant à un excentrement dont la valeur varie en fonction de la portion angulaire de l'axe du disque excentré par rapport à l'axe générale de rotation A1 et en fonction de la position axiale du disque dans l'empilement.

De même, l'invention n'est pas limitée à une valeur d'excentrement constante pour chacun des disques excentrés.

Dans l'exemple illustré sur les figures, la valeur de l'excentrement est arbitrairement choisie comme étant une valeur constante sensiblement égale à la moitié de l'épaisseur constante du bandeau principal de la courroie 12.

Comme dans l'exemple illustré aux figures 4 et 5, on peut aboutir à un excentrement variant transversalement d'une manière périodique, cette périodicité étant obtenue sur au moins un tour du galet. En plus, d'une réduction du phénomène de battement des brins de la courroie, cette disposition a pour but de répartir les variations transversales de vibrations d'une manière équivalente sur toute la largeur de la piste afin d'éviter un désalignement transversal de la courroie.

L'invention n'est pas non plus limitée au cas où chaque disque présente une piste extérieure cylindrique circulaire.

En effet, l'empilement de disques peut être généralisé à l'utilisation de formes, qui ne sont pas de révolution, appelées cames. On définit alors une came comme l'assemblage, à même largeur, du volume d'un disque à diamètre primitif (précédemment défini) avec au moins un disque à forme générale ellipsoïdale ou ronde, dont les excentrements respectifs peuvent varier.

Chaque came de faible épaisseur peut être de type simple, c'est-à-dire comportant un seul maximum de rayon, ou complexe, c'est-à-dire comportant plusieurs maximums de rayon.

Comme dans les exemples illustrés précédemment relatifs à des disques cylindriques circulaires, l'ondulation globale apparente de la piste de surface extérieure périphérique du galet 24 peut être obtenue en faisant varier les paramètres d'épaisseur et de dimension des cames ainsi que leurs excentrements respectifs, notamment en conservant l'avantage visant à prévenir l'effet de glissement latéral intempestif de la courroie par rapport au galet.

L'invention n'est pas limitée non plus à la réalisation du galet par un empilement de disques adjacents, la surface globale ondulée de la piste du galet pouvant être obtenue par tout autre moyen, notamment par moulage et/ou par usinage.

Le profil de chaque élément de l'empilage, et plus particulièrement de ceux constituant les saillies 28, peuvent présenter en section des bords arrondis afin de réduire les risques d'usure prématurée du dos 22 de la courroie 12 du fait du glissement latérale de cette dernière par rapport au galet.

L'invention n'est pas non plus limitée au cas où le galet 24 est utilisé comme galet tendeur ou galet de guidage d'une courroie crantée, le galet selon l'invention pouvant être utilisé avec n'importe quel type de transmission par courroie maintenue sous tension.

De même sans sortir du cadre de la présente invention, les disques peuvent être de profil bombé selon la direction axiale A1 ou encore ils peuvent présenter des bords arrondis.

De même, la surface périphérique du galet peut être de forme générale cylindrique, bombée ou encore tronconique.

## Revendications

1. Dispositif de guidage d'une courroie (12) de transmission, pour l'entraînement en rotation de composants et d'équipements par le vilebrequin d'un moteur de véhicule automobile, comprenant un galet, **caractérisé en ce que** le corps du galet est constitué d'un empilage de disques (26A, 26B) lesdits disques étant agencés de façon que la surface périphérique (28, 30) dudit galet soit ondulée selon la direction axiale (A1).

2. Dispositif de guitage d'une courroie selon la revendication précédente, **caractérisé en ce que** les disques (26A, 26B) sont adjacents.

3. Dispositif de guitage d'une courroie selon l'une quelconque des revendications 1 ou 2, **caractérisé en ce que** des disques (26A, 26B) sont cylindriques circulaires

4. Dispositif de guitage d'une courroie selon la revendication précédente, **caractérisé en ce que** les disques (26A, 26B) sont de diamètres différents.

5. Dispositif de guitage d'une courroie selon l'une quelconque des revendications 1 ou 2, **caractérisé en ce que** des disques présentent un profil extérieur en forme de came.

6. Dispositif de guitage d'une courroie selon l'une quelconque des revendications 1 à 5, **caractérisé en ce que** des disques (26A, 26B) sont coaxiaux (A1).

7. Dispositif de guitage d'une courroie selon l'une quelconque des revendications 1 à 6, **caractérisé en ce que** des disques (26A, 26B) sont excentrés les uns par rapport aux autres.

## Patentansprüche

1. Vorrichtung zur Führung eines Antriebsriemens (12) zum Drehantrieb von Bauteilen und Ausrüstungsteilen durch die Kurbelwelle des Motors eines Kraftfahrzeuges mittels einer Rolle, **dadurch gekennzeichnet, dass** der Rollenkörper aus dem Zusammenbau von Scheiben (26A, 26B) besteht, wobei diese Scheiben derart ausgebildet bzw. angeordnet sind, dass die Umfangsfläche (28, 30) der Rolle in Axialrichtung (A1) wellenförmig ausgebildet ist.

2. Vorrichtung zur Führung eines Riemens nach dem vorhergehenden Anspruch, **dadurch gekennzeichnet, dass** die Scheiben (26A, 26B) zueinander benachbart sind.

3. Vorrichtung zur Führung eines Riemens nach einem der Ansprüche 1 oder 2, **dadurch gekennzeichnet, dass** die Scheiben (26A, 26B) zylindrisch und kreisförmig sind.

4. Vorrichtung zur Führung eines Riemens nach dem vorhergehenden Anspruch, **dadurch gekennzeichnet, dass** die Scheiben (26A, 26B) unterschiedliche Durchmesser aufweisen.

5. Vorrichtung zur Führung eines Riemens nach einem der Ansprüche 1 oder 2, **dadurch gekennzeichnet, dass** die Scheiben ein nockenförmiges Außenprofil aufweisen.

6. Vorrichtung zur Führung eines Riemens nach einem der Ansprüche 1 bis 5, **dadurch gekennzeichnet, dass** die Scheiben (26A, 26B) koaxial (A1) zueinander sind.

7. Vorrichtung zur Führung eines Riemens nach einem der Ansprüche 1 bis 6, **dadurch gekennzeichnet, dass** die Scheiben (26A, 26B) exzentrisch zueinander angeordnet sind.

## Claims

1. A device for guiding a transmission belt (12), adapted to drive in rotation components and equipment via the crankshaft of an automobile vehicle engine, comprising a roller, **characterised in that** the body of the roller is formed by a stack of discs (26A, 26B), these discs being arranged such that the peripheral surface (28, 30) of the roller is undulated in the axial direction (A1).

2. A device for guiding a belt as claimed in the preceding claim, **characterised in that** the discs (26A, 26B) are adjacent.

3. A device for guiding a belt as claimed in any one of claims 1 or 2, **characterised in that** the discs (26A, 26B) are circular and cylindrical.

4. A device for guiding a belt as claimed in the preceding claim, **characterised in that** the discs (26A, 26B) have different diameters.

5. A device for guiding a belt as claimed in any one of claims 1 or 2, **characterised in that** the discs have an external profile in the shape of a cam.

6. A device for guiding a belt as claimed in any one of claims 1 to 5, **characterised in that** the discs (26A, 26B) are coaxial (A1).

7. A device for guiding a belt as claimed in any one of claims 1 to 6, **characterised in that** the discs (26A, 26B) are eccentric with respect to one another.
